# NEUE EUROPÄISCHE PATENTSCHRIFT

(11) **EP 0 285 925 B2**
(45) Veröffentlichungstag und Bekanntmachung des Hinweises auf die Entscheidung über den Einspruch: **03.07.1996**
(45) Hinweis auf die Patenterteilung: 18.12.1991
(21) Anmeldenummer: 88104789.8
(22) Anmeldetag: 25.03.1988
(51) Int. Cl.: E06B 7/22, B60R 13/06

(54) **Dichtungsprofil**
Sealing profile
Profil d'étanchéité

(30) Priorität: 10.04.1987 DE 3712149; 15.01.1988 DE 3801073
(43) Veröffentlichungstag der Anmeldung: 12.10.1988
(73) Patentinhaber: Bayerische Motoren Werke Aktiengesellschaft, 80788 München (DE)
(72) Erfinder: Brachmann, Walter, D-8993 Nonnenhorn (DE); Leistner, Rolf, D-8000 München 50 (DE)
(74) Vertreter: Dexheimer, Rolf

(56) Entgegenhaltungen:
- EP-A- 0 086 959
- DE-A- 2 127 097
- DE-A- 2 349 689
- DE-A- 3 016 263
- DE-C- 572 409
- DE-C- 576 672
- DE-C- 2 945 836
- FR-A- 2 128 709
- FR-A- 2 435 644
- GB-A- 640 966

## Beschreibung

Die Erfindung bezieht sich auf ein Dichtungsprofil aus elastomerem Material oder Kunststoff mit mindestens einer abragenden, an die abzudichtende Gegenfläche elastisch anlegbaren Dichtlippe, wobei das Profil mit der Dichtlippe mindestens zwei Querschnittsbereiche mit Material unterschiedlicher Härte und mindestens eine, sich über beide Bereiche unterschiedlicher Härte und bis in die Dichtlippe erstreckende Armierung aus einem hochelastischen, bandförmigen Federstahl aufweist.

Ein derartiges Dichtungsprofil ist aus der DE-A-2 349 689 bekannt. Die Armierung aus elastischem, bandförmigem Federstahl weist in dem Bereich, in den diese Armierung in den Profilquerschnitt aus dem weicheren Material reicht, zur Seite des Bandes hin, offene Schlitze mit konstanter Schlitzbreite auf. Es entstehen dadurch schmale Finger, die ebenfalls gleiche Breite haben. Mit einer solchen Armierung ist es nicht möglich, über die Querschnittslänge der Dichtlippe Bereiche unterschiedlicher Biegeelastizität zu erhalten.

Aus der FR-A-2 435 644 ist es bekannt, ein Gerüstband für Dichtungsprofile mit unterschiedlich breiten und auch unterschiedlich langen Ausstanzungen zu versehen. Das Gerüstband ist jedoch nur in dem U-förmigen Befestigungsbereich des Dichtprofiles angeordnet und ist nicht in der Lage, den Dichtabschnitt des Gesamtprofils zu stützen oder zu beeinflussen.

Mit den Ausstanzungen des Gerüstbandes soll einem Problem begegnet werden, das sich beim Verlegen des Dichtprofils unter zu großen Zugspannungen ergibt. Bei zu großen Zugspannungen kann es dazu kommen, daß das Profil in seiner Längserstreckung zu sehr gedehnt wird und dann im Lauf der Zeit im eingebauten Zustand schrumpft, so daß Lücken entstehen. Mit den in bestimmter Weise ausgebildeten Ausstanzungen des Gerüstbandes kann verhindert werden, daß beim Verlegen des Dichtungsprofils eine zu starke Längsdehnung des Profiles erfolgt.

Der Erfindung liegt die Aufgabe zugrunde, ein Dichtungsprofil zu schaffen, das neben einer hohen Rückstellgeschwindigkeit eine schnelle und sichere Abdichtung mit weicher Anlage der Dichtlippe an der entsprechenden Gegenfläche gewährleistet, wobei insbesondere Anpreßdruck und Elastizität über die Breite des Armierungsbandes partiell geändert und eingestellt werden können.

Erfindungsgemäß wird dies bei einem Dichtungsprofil der eingangs erwähnten Art dadurch erreicht, daß die Federstahlarmierung in Querrichtung Bereiche unterschiedlicher Steifigkeit gewährleistende Ausstanzungen aufweist.

Mit einem so gestalteten Dichtungsprofil kann die Dichtlippe entlang ihrer Querschnittslänge hinsichtlich ihrer Biegeelastizität und damit ihres örtlichen Anpreßdruckes sehr unterschiedlich eingestellt werden. Durch entsprechende Wahl der Ausstanzungen kann beispielsweise das freie Ende der Dichtlippe sehr biegsam gestaltet werden, während ein daran anschließender Bereich etwas weniger biegsam sein kann. Zu der Wurzel der Dichtlippe hin kann dann, wenn dies in dem besonderen Einsatzfall zweckmäßig ist, wieder eine höhere Elastizität gewählt werden, um die Dichtlippe als Ganzes nachgiebiger zu machen. Es ist aber auch möglich, zum freien Ende der Dichtlippe hin eine höhere Steifigkeit vorzusehen, indem dort mehr Material des Federstahlbandes eingebettet ist. Auch dann kann es sinnvoll sein, zum Fußbereich der Dichtlippe hin eine größere Biegsamkeit vorzusehen, indem man dort durch entsprechend gestaltete Ausstanzungen weniger Material des elastischen, bandförmigen Federstahls vorsieht.

Die Ausstanzungen können dabei zu einer Längskante des Federstahlbandes hin zunehmende Breite aufweisen.

Damit das Dichtungsprofil auch in der Ebene der Armierung flexibel ist, können die Ausstanzungen bis zu wenigstens einer der beiden Längskanten des Federstahlbandes verlaufen und dort offen sein.

Neben den die Höhe des Anpreßdruckes bestimmenden Ausstanzungen kann auch eine weitere Reihe von Ausstanzungen zur Verbesserung der Verankerung im Deckmaterial vorgesehen sein.

Anhand einer schematischen Zeichnung sind Aufbau und Wirkungsweise von Ausführungsbeispielen nach der Erfindung näher erläutert. Dabei zeigen
- Fig.1: eine Aufsicht auf ein flaches Federstahlband,
- Fig. 2: eine Aufsicht auf eine andere Ausgestaltung des Federstahlbandes,
- Fig. 3: ein U-förmiges Dichtungsprofil mit seitlich abragender Dichtlippe aus zwei verschiedenen Materialien und einer Federstahlarmierung
- Fig. 4: eine Schachtabdichtung aus unterschiedlichem Material und einer Federstahlarmierung.

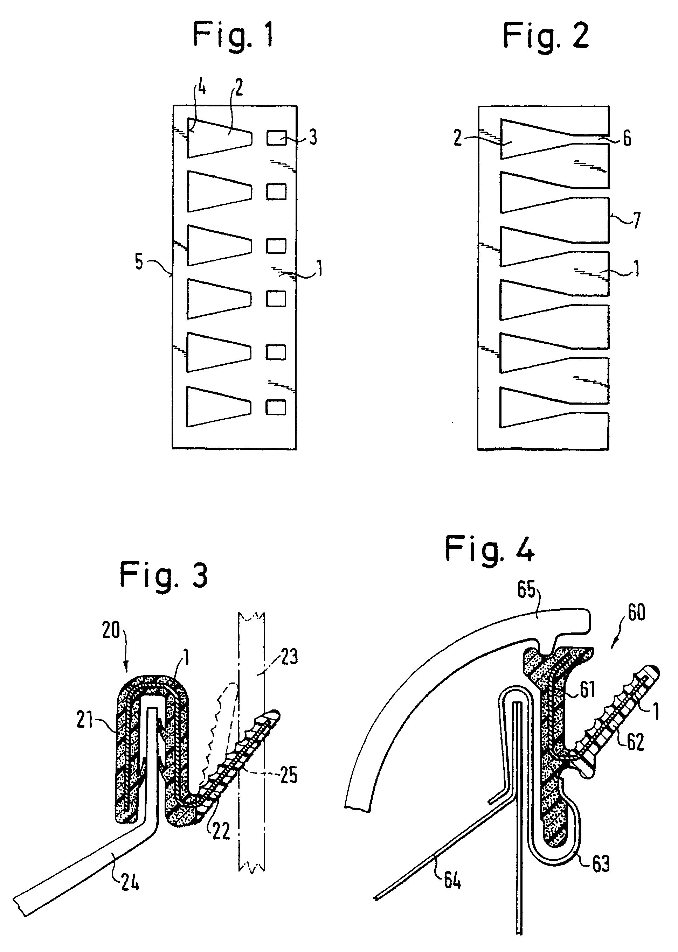

Wie man aus Fig. 1 ersieht, besteht die Armierung aus einem flachen, langgestreckten Band 1 aus zähem Federstahl relativ geringer Dicke - beispielsweise von weniger als 0,1 mm - , in das nebeneinanderliegend zwei Reihen von Ausstanzungen 2 und 3 eingeschnitten sind. Bei dem dargestellten Ausführungsbeispiel sind die Ausstanzungen 2 trapezförmig ausgebildet, wobei die längere Parallelseite 4 angrenzend an eine Seitenkante 5 des Federstahlbandes 1 verläuft, während die Ausstanzungen 3 aus Rechtecken bestehen.

Bei einer derartigen Gestaltung der Ausstanzungen 2 ergibt sich, daß der stehenbleibende Materialquerschnitt des Federstahlbandes 1 zum linken Rand 5 hin abnimmt, so daß dadurch ein weicheres, elastisches Verhalten und eine Variation des Anpreßdruckes und der Rückstellkraft des Federstahlbandes zum Rand hin erhalten wird.

Damit können unterschiedliche Rückstellkräfte eingestellt und entsprechend der jeweiligen Größe und/oder Geometrie der Ausstanzungen abschnittsweise über die Breite des Federstahlbandes ein unterschiedliches Elastizitätsverhalten erreicht werden in dem Sinne, daß das Federstahlband beispielsweise zum Rand hin starrer oder flexibler wird.

Die Ausstanzungen 2 beliebiger geometrischer Gestaltung dienen dabei zur Einstellung der Elastizität und der Rückstellkräfte des Federstahlbandes, während die Ausstanzungen 3 im wesentlichen vorgesehen sind, um eine bessere Verankerung im Profilmaterial bzw. einen Durchtritt des Profilmaterials zu ermöglichen.

Um darüber hinaus sicherzustellen, daß das Federstahlband auch dreidimensional, d.h. um Biegungen in Längsrichtung des Dichtungsprofils verformt werden kann, ist es nach Fig. 2 möglich, daß die Ausstanzungen 2 von ihrer Schmalseite aus Schlitze 6 bis zum Rand 7 des Federstahlbandes 1 aufweisen und damit seitlich offen sind.

Bei den zwei Reihen von Ausstanzungen 2 und 3 nach Fig. 1 ist es aber auch möglich - was in der Figur nicht gesondert dargestellt ist - daß nicht nur eine Reihe von Ausstanzungen zur benachbarten Längsseite hin offen ist, sondern daß beide Ausstanzungen 2 und 3 zur Seite hin offen sind, so daß als Verbindung in Längsrichtung nur der Steg zwischen den Ausnehmungen 2 und 3 stehenbleibt.

In einem ersten Ausführungsbeispiel für die Anwendung eines solchen Federstahlbandes ist in Fig. 3 ein Klemmprofil 20 dargestellt, das aus einer U-förmigen Klemmleiste 21 aus härterem Material und einer vom Ende eines freien Schenkels der Klemmleiste 21 abragenden Dichtlippe 22 aus weicherem Material besteht, die gegen eine Scheibe 23 abdichtet. Die Klemmleiste 21 ist dabei auf einen Flansch 24 des Türbleches aufgeschoben. Innerhalb des Profils 20 erstreckt sich sowohl über die Klemmleiste 21, als auch über die Dichtlippe 22 durchgehend eine Armierung in Form eines Federstahlbandes 1, das im Dichtlippenbereich 22 ebenfalls mit entsprechenden Ausstanzungen zur Einstellung der Elastizität versehen ist. Durch dieses sich über beide Materialbereiche erstreckende Federstahlband 1 ist einmal die aus härterem Material bestehende Klemmleiste 21 zusätzlich verstärkt, während im weicheren Bereich der Dichtlippe 22 eine hohe Elastizität und eine hohe Rückstellkraft gewährleistet ist. Zusätzlich kann die Dichtlippe 22 auf ihrer Außenseite noch mit einer Gleitschicht 25 oder einer Beflockung versehen sein.

Bei dem Ausführungsbeispiel nach Fig. 4 ist eine Schachtabdichtung gezeigt, bei der der vertikale Profilsteg 61 aus einem härteren Material besteht als die Dichtlippe 62. Innerhalb des Profils 60 ist bei dem dargestellten Ausführungsbeispiel eine Armierung in Form eines V-förmig gebogenen Federstahlbandes 1 einextrudiert, wobei sich der eine Schenkel innerhalb der Dichtlippe 62 und der andere Schenkel nach oben im Profilsteg 61 erstreckt. Die Festlegung dieser Schachtabdichtung erfolgt dabei mittels einer Metallklammer 63, die auf den Türflansch 64 aufgesetzt ist und einer von oben gegenhalternde Innenverkleidung 65.

Durch die härtere Materialwahl für den Profilsteg 61 ist es also ausreichend, wenn die Dichtlippe 62 aus weicherem Material eine Armlerung in Form eines Federstahlbandes aufweist, dessen einer Schenkel sich zur zusätzlichen Abstützung innerhalb des härteren Profilsteges 61 erstreckt.

Mit der erfindungsgemäßen Anordnung einer Federstahlarmierung in derartigen Dichtungen, die insbesondere für Schachtabdichtungen, Türdichtungen oder Schwellerdichtungen an Kraftfahrzeugen verwendet werden können, wird somit eine bleibende Verformung des Gummis oder des Kunststoffes der Dichtung verhindert. Vielmehr wird eine stetige Anlage und Abdichtung zur Gegenfläche mit hoher Rückstellgeschwindigkeit sicher gewährleistet.

## Patentansprüche

1. Dichtungsprofil (20; 60) aus elastomerem Material oder Kunststoff mit mindestens einer abragenden, an die abzudichtende Gegenfläche elastisch anlegbaren Dichtlippe (22; 62), wobei das Profil (20; 60) mit der Dichtlippe (22; 62) mindestens zwei Querschnittssbereiche mit Material unterschiedlicher Härte und mindestens eine, sich über beide Bereiche unterschiedlicher Härte und bis in die Dichtlippe (22; 62) erstreckende Armierung (1) aus einem hochelastischen, bandförmigen Federstahl aufweist,
dadurch gekennzeichnet, daß die Federstahlarmierung (1) in Querrichtung Bereiche unterschiedlicher Steifigkeit gewährleistende Ausstanzungen (2) aufweist.

2. Dichtungsprofil nach Anspruch 1, dadurch gekennzeichnet, daß die Ausstanzungen (2) zu einer Längskante- (5) des Federstahlbandes (1) hin zunehmende Brelte aufweisen.

3. Dichtungsprofil nach Anspruch 1 oder 2, dadurch gekennzeichnet, daß neben den die Höhe des Anpreßdruckes bestimmenden Ausstanzungen (2) eine weitere Reihe von Ausstanzungen (3) zur Verbesserung der Verankerung im Profilmaterial vorgesehen ist.

4. Dichtungsprofil nach Anspruch 1 oder 3, dadurch gekennzeichnet, daß die Ausstanzungen (2, 3) bis zu wenigstens einer der beiden Längskanten (5, 7) des Federstahlbandes (1) verlaufen und dort offen sind.

## Claims

1. Sealing profile (20; 60) made of elastomeric or plastic material, having at least one projecting sealing lip (22; 62) which may be applied elastically against the counter surface to be sealed, the profile (20; 60) with the sealing lip (22; 62) comprising at least two cross-sectional regions with material of differing hardness and at least one reinforcement (1) made of highly elastic, strip-like spring steel, which extends over both regions of differing hardness and as far as into the sealing lip (22; 62),
characterized in that the spring steel reinforcement (1) has in a transverse direction punched-out holes (2) which guarantee regions of differing rigidity.

2. Sealing profile according to claim 1, characterized in that the punched-out holes (2) have a width which increases towards a longitudinal edge (5) of the spring steel strip (1).

3. Sealing profile according to claim 1 or 2, characterized in that, besides the punched-out holes (2) which determine the level of the contact pressure, a further row of punched-out holes (3) is provided for improving the anchoring in the profile material.

4. Sealing profile according to claim 1 or 3, characterized in that the punched-out holes (2, 3) extend up to at least one of the two longitudinal edges (5, 7) of the spring steel strip (1) and are open there.

## Revendications

1. Profilé d'étanchéité (20 ; 60) en matière élastomère ou en matière plastique, ayant au moins une lèvre d'étanchéité (22 ; 62), en saillie et pouvant s'appliquer élastiquement à la surface antagoniste à rendre étanche, le profilé (20 ; 60) ayant la lèvre d'étanchéité (22 ; 62) comportant au moins deux régions de section transversale en matériau de dureté différente, et au moins une armature (1) en acier pour ressort très élastique sous forme de ruban s'étendant sur les deux régions de dureté différente et jusqu'à la lèvre d'étanchéité (22; 62),
caractérisé en ce que l'armature (1) en acier pour ressort a dans la direction transversale des découpes (2) donnant des régions de rigidité différente.

2. Profilé d'étanchéité suivant la revendication 1, caractérisé en ce que les découpes (2) présentent une largeur croissante vers un côté longitudinal (5) du ruban (1) en acier pour ressort.

3. Profilé d'étanchéité suivant la revendication 1 ou 2, caractérisé en ce qu'en plus des découpes (2), déterminant le niveau de la pression d'application, il est prévu une autre rangée de découpes (3) en vue d'améliorer l'ancrage dans le matériau du profilé.

4. Profilé d'étanchéité suivant la revendication 1 ou 3, caractérisé en ce que les découpes (2, 3) s'étendent jusqu'à au moins l'un des deux bords longitudinaux (5, 7) du ruban (1) en acier pour ressort et y sont ouvertes.
